Europäisches Patentamt

European Patent Office

Office européen des brevets

(19)

(11) **EP 1 290 088 B1**

(12) **FASCICULE DE BREVET EUROPEEN**

(45) Date de publication et mention
de la délivrance du brevet:
**05.01.2005  Bulletin 2005/01**

(21) Numéro de dépôt: **01936565.9**

(22) Date de dépôt: **17.05.2001**

(51) Int Cl.7: **C08L 63/00**, C08L 53/00

(86) Numéro de dépôt international:
**PCT/FR2001/001517**

(87) Numéro de publication internationale:
**WO 2001/092415 (06.12.2001 Gazette 2001/49)**

(54) **MATERIAUX THERMODURS A TENUE AU CHOC AMELIOREE**

WÄRMEHÄRTENDE MATERIALIEN MIT VERBESSERTER SCHLAGFESTIGKEIT

THERMOSET MATERIALS WITH IMPROVED IMPACT RESISTANCE

(84) Etats contractants désignés:
**AT BE CH CY DE DK ES FI FR GB GR IE IT LI LU
MC NL PT SE TR**

(30) Priorité: **31.05.2000  FR 0007024**

(43) Date de publication de la demande:
**12.03.2003  Bulletin 2003/11**

(73) Titulaire: **ARKEMA
92800 Puteaux (FR)**

(72) Inventeurs:
 • **COURT, François
   F-27470 Fontaine l'Abbé (FR)**
 • **LEIBLER, Ludwik
   F-75016 Paris (FR)**
 • **PASCAULT, Jean-Pierre
   F-69100 Villeurbanne (FR)**
 • **RITZENTHALER, Sophie
   F-69740 Genas (FR)**

(56) Documents cités:
  **GB-A- 2 310 214          US-A- 4 916 174**

 • **PATENT ABSTRACTS OF JAPAN vol. 1998, no.
   04, 31 mars 1998 (1998-03-31) & JP 09 316299 A
   (NOF CORP), 9 décembre 1997 (1997-12-09)**
 • **PATENT ABSTRACTS OF JAPAN vol. 1997, no.
   01, 31 janvier 1997 (1997-01-31) & JP 08 245858
   A (NIPPON OIL &AMP;FATS CO LTD), 24
   septembre 1996 (1996-09-24)**
 • **DATABASE CHEMABS [en ligne] Chemical
   Abstracts Service, Columbus, Ohio, US;
   KURAMOCHI, T ET AL: "Modification of instant
   adhesive in blending of cyanoacrylate and
   SIS-g-MMA" XP002162276 & NIPPON
   SETCHAKU GAKKAISHA, vol. 30, pages
   207-213,**
 • **PATENT ABSTRACTS OF JAPAN vol. 015, no.
   508 (C-0897), 24 décembre 1991 (1991-12-24) &
   JP 03 223377 A (TERUMO CORP;OTHERS: 01), 2
   octobre 1991 (1991-10-02)**
 • **QIAN J Y ET AL: "SYNTHESIS AND
   APPLICATION OF CORE-SHELL PARTICLES AS
   TOUGHENING AGENTS FOR EPOXIES"
   JOURNAL OF APPLIED POLYMER
   SCIENCE,US,JOHN WILEY AND SONS INC. NEW
   YORK, vol. 58, no. 2, 10 octobre 1995
   (1995-10-10), pages 439-447, XP000538689 ISSN:
   0021-8995**

## Description

[Domaine de l'invention]

La présente invention concerne des matériaux thermodurs à tenue au choc améliorée. Un matériau thermodur est défini comme étant formé de chaînes polymères de longueur variable liées entre elles par des liaisons covalentes de manière à former un réseau tridimensionnel. Les matériaux thermodurs peuvent être obtenus par exemple par réaction d'une résine thermodurcissable telle qu'un époxy avec un durcisseur de type amine. Les matériaux thermodurs présentent de nombreuses propriétés intéressantes qui les font être utilisés comme adhésifs structuraux ou comme matrice pour des matériaux composites ou encore dans les applications de protection de composants électroniques. Les matériaux de l'invention comprennent une résine thermodure et un copolymère à blocs ayant au moins un bloc constitué majoritairement de motifs méthacrylate de méthyle. Ces matériaux peuvent être fabriqués par dissolution du copolymère dans la résine thermodurcissable puis on ajoute le durcisseur et on réticule à chaud.

[Le problème technique]

Les matériaux époxy ont une densité de réticulation élevée, ce qui leur assure une température de transition vitreuse, Tg, élevée, qui confère au matériau d'excellentes propriétés thermomécaniques. Plus la densité de réticulation est élevée, plus haute est la Tg du matériau et par conséquent meilleures sont les propriétés thermomécaniques : plus la température limite d'utilisation du matériau est élevée. Néanmoins pour de nombreuses applications, les propriétés de résistance aux chocs des matériaux époxy sont insuffisantes. De nombreuses solutions ont été développées pour tenter de répondre à ce problème. Parallèlement, si les matériaux Époxy sont dans leur ensemble difficiles à renforcer aux chocs, les plus difficiles sont les matériaux époxy de haute Tg. De nombreuses études ont été consacrées au renforcement choc de ces matériaux époxy de haute Tg et ces études concluent que l'addition de caoutchouc à un matériau époxy de haute Tg n'a pas d'effet renforçant. A titre d'exemple de tels matériaux on peut citer les systèmes DGEBA/DDS (Tg=220°C) dans lesquels DDS désigne la diamino diphényl sulphone ou les systèmes DGEBA/MCDEA (Tg=180°C) dans lesquels MCDEA désigne la 4,4'-Méthylènebis-(3-chloro-2,6-diéthylaniline). Dans les matériaux précédents DGEBA désigne le diglycidyl ether du bisphenol A.

[l'art antérieur]

On a décrit l'addition de Caoutchoucs réactifs (ATBN, CTBN). Ces abréviations signifient :

CTBN : Carboxyl terminated random copolymer of butadiene and acrylonitrile.
ATBN : Amino terminated random copolymer of butadiene and acrylonitrile.

Ces produits sont des oligomères à base de butadiène et d'acrylonitrile terminés soit par des fonctions carboxyles soit par des fonctions amines. Le butadiène a une Tg très basse ce qui est favorable pour obtenir un bon renforcement aux chocs mais il n'est pas miscible avec les résines époxy. Un certain pourcentage d'acrylonitrile est copolymérisé avec le butadiène afin que le produit formé soit initialement miscible avec la résine époxy et donc puisse être aisément incorporé à celle-ci. P. Lovell (Macromol. Symp. 92, Pages 71-81, 1995) et A. Mazouz et coll. Polymer Material Science Engineering, 70, p17, 1994 relatent qu'à l'issue de la réaction de réticulation une partie de l'oligomère fonctionnel forme des particules élastomère et une partie non négligeable reste incorporée dans la matrice. Ceci se traduit par un abaissement de la Tg du matériau obtenu par rapport au réseau époxy pur ce qui n'est pas souhaitable pour les applications nécessitant de bonnes propriétés thermomécaniques. Les domaines d'élastomères formés ont une taille importante classiquement comprise entre 0.5 microns et 5 microns. Le renforcement obtenu n'est pas satisfaisant.

Pour toutes ces raisons d'autres solutions pour le renforcement au choc des réseaux époxy ont été recherchées. On peut citer par exemple, P. Lovell (Macromol. Symp. 92, Pages 71-81, 1995) qui établit que le renforcement par des particules coeur-écorce préformées conduit à de meilleurs résultats.

S'agissant du renforcement par des particules préformées coeur-écorce (core shell) : ce sont des particules préformées avec un coeur élastomère de température de transition vitreuse inférieure à -20°C et une écorce rigide de température de transition vitreuse supérieure à 50°C, portant ou non des fonctions réactives. On définit une fonction réactive comme un groupement chimique capable de réagir avec les fonctions oxiranes des molécules époxy ou avec les groupements chimiques du durcisseur. A titre d'exemples non limitatif de fonctions réactives on peut citer : les fonctions oxiranes, les fonctions amines, les fonctions carboxy. Ces particules de taille bien définie sont ajoutées aux réactifs (époxy et durcisseur). Après réaction, le matériau formé est caractérisé par une dispersion de ces particules au sein de la matrice thermodure. Dans le matériau obtenu les particules d'élastomères ont la même taille qu'au départ, avant la réaction. Ce résultat est bien connu, comme exemple de l'art antérieur le décrivant on peut citer par exemple l'article de Maazouz et coll, Polymer Bulletin 33, pages 67-74, 1994 et de Sue et coll., Rubber-Toughened Plastics, 1993, Pages 259-291 (cf . page 261).

Ces particules préformées sont obtenues par une synthèse en émulsion en deux étapes, le coeur élastomère est synthétisé lors de la première étape, l'écorce est greffée sur le coeur lors de la deuxième étape. Ce procédé de synthèse conduit à des particules dont la taille du coeur varie entre 30 nanomètres et 2 micromètres (Sue et coll., Rubber-Toughened Plastics, 1993, Pages 259-291 (cf. page 261)). De nombreuses études ont été consacrées à la détermination de la taille du coeur élastomère de la particule pour obtenir un renforcement au choc optimal. Ces études montrent qu'avec des particules préformées un renforcement satisfaisant ne peut être obtenu que pour des tailles de particules supérieures à 120 nanomètres.

Étant donné la taille des domaines d'élastomères dans le matériau obtenu, celui-ci n'est pas transparent. Cette opacité est gênante pour certaines applications. C'est le cas par exemple des applications des matériaux thermodurs dans les composites où le fabricant souhaite pouvoir constater visuellement la qualité de son assemblage (matériau thermodur + fibres, ou matériau thermodur +charges). On peut également citer l'exemple des applications électroniques des matériaux époxy, l'opacité du matériau est néfaste, elle gêne l'utilisateur.

l'art antérieur a aussi décrit l'addition d'un Dibloc PEO-PEE : Hillmyer et coll. (M. A. Hillmyer, P. M. Lipic, D. A. Hajduk, K. Almdal, F. S. Bates, Journal of American Chemical Society, 1997,119, 2749-2750) ont conduit des travaux sur des mélanges d'un système thermodurcissable époxy / anhydride phtalique et d'un dibloc A-B où A est le poly (ethylene oxyde) et B le poly(ethyl ethylene) PEO-PEE. Ces auteurs ont montré que le matériau obtenu est caractérisé par une morphologie très particulière. Il est constitué d'une matrice thermodure dans laquelle sont régulièrement répartis des cylindres de PEE ayant tous le même diamètre de 5 à 10 nanomètres, eux-mêmes étant entourés d'une écorce (ou d'une gaine) de PEO d'une épaisseur de quelques nanomètres. Les auteurs ont constaté que les matériaux obtenus étaient transparents mais ils n'ont pas étudié leurs propriétés ni fait allusion aux propriétés qu'ils pourraient présenter.

On a aussi décrit l'addition d'un dibloc PEO-PEP dans un système DGEBA-MDA, Lipic PM Bates FS et Hillmyer MA, Journal of the American Chemical Society 1998, 120, 8963-8970. MDA désigne la méthylène diamine. Les travaux et les résultats sont équivalents à ceux du paragraphe précédent.

On a aussi décrit l'addition d'un copolymère à blocs Polysiloxane-**Polycaprolactone :** PCL-b-PDMS-b-PCL et (PCL)$_2$-b-PDMS-b-(PCL)$_2$ Könczol et coll. (Journal of Applied Polymer Science, Vol 54, pages 815-826, 1994) ont étudié des mélanges entre un système époxy / anhydride et un copolymère multibloc PCL-b-PDMS-b-PCL ou (PCL)$_2$-b-PDMS-b-(PCL)$_2$ où PCL désigne la polycaprolactone et PDMS le polydiméthylsiloxane. Les auteurs montrent que le matériau obtenu est transparent et que l'addition de 5% à 15% de copolymère permet une amélioration significative de la résistance au choc du matériau époxy.

L'art antérieur fait également référence à l'utilisation de copolymères à blocs pour compatibiliser des systèmes thermoplastiques/thermodurs. Ainsi, Girard-reydet et coll. , Polymer, 1999, n°40 page 1677, ont étudié des mélanges thermoptastique/thermodur où le thermoplastique est soit le PPE (polyphenylene ether), soit le PEI (polyetherimide) et le système thermodur est le couple DGEBA/MCDEA. Ces mélanges sont fragiles. Les auteurs ont constaté que l'utilisation d'un copolymère à blocs SEBS maléisé, préalablement modifié par réaction sur une monoamine ou une diamine (telle que MCDEA), permettait d'améliorer la résistance aux chocs du mélange thermoplastique /thermodur.

L'art antérieur n'a pas décrit l'addition de copolymères blocs ayant au moins un bloc constitué majoritairement de motifs méthacrylate de méthyle. On a maintenant trouvé que l'ajout de copolymères blocs ayant au moins un bloc constitué majoritairement de motifs méthacrylate de méthyle dans des matériaux thermodurs conduisait à des matériaux thermodurs à tenue au choc améliorée. De plus ces matériaux restent transparents et la Tg est conservée ou n'est pas abaissée de plus de 12°C. On peut, en plus du copolymère à blocs constitué majoritairement de motifs méthacrylate de méthyle, ajouter d'autres copolymères blocs ou des modifiants choc tels que des coeur- écorce, des élastomères fonctionnalisés. Selon la nature de ces modifiants ajoutés en plus le matériau peut ne pas rester transparent mais la résistance au choc est très fortement améliorée.

[Brève description de l'invention]

La présente invention concerne un matériau thermodur à tenue au choc améliorée comprenant :

• 99 à 20% d'une résine thermodure,
• 1 à 80% d'un modifiant choc comprenant au moins un copolymère choisi parmi les copolymères à blocs S-B-M, B-M et M-B-M dans lesquels:

➢ chaque bloc est relié à l'autre au moyen d'une liaison covalente ou d'une molécule intermédiaire reliée à l'un des blocs par une liaison covalente et à l'autre bloc par une autre liaison covalente,

> M est un PMMA homopolymère ou un copolymère comprenant au moins 50% en poids de méthacrylate de méthyle,
> B est incompatible avec la résine thermodure et avec le bloc M et sa température de transition vitreuse Tg est inférieure à la temp d'utilisation du matériau thermodur,
> S est incompatible avec la résine thermodure, le bloc B et le bloc M et sa Tg ou sa température de fusion Tf est supérieure à la Tg de B.

[Description détaillée de l'invention]

S'agissant du matériau thermodur il est défini comme étant formé de chaînes polymères de longueur variable liées entre elles par des liaisons covalentes de manière à former un réseau tridimensionnel.
A titre d'exemple on peut citer les cyanoacrylates, les bismaleimides et les résines époxy reticulées par un durcisseur.
Parmi les cyanoacrylates on peut citer les 2-cyanoacrylic ester qui sont des matériaux thermodurs obtenus par polymérisation du monomère CH2=C(CN)COOR avec différents groupements R possibles (sans nécessité d'ajouter un durcisseur).
Les formulations thermodures de type bismaléimide sont par exemple : méthylènedianiline + benzophenone dianhydride + nadic imide méthylènedianiline + benzophenone dianhydride + phenylacetylene méthylènedianiline + anhydride maléique + matéimide.
Le matériau thermodur provient avantageusement de la réaction d'une résine époxy thermodurcissable et d'un durcisseur. Il est défini aussi comme tout produit de la réaction d'un oligomère porteur de fonctions oxirane et d'un durcisseur. De par les réactions mises en jeu lors de la réaction des ces résines époxy on aboutit à un matériau réticulé correspondant à un réseau tridimensionnel plus ou moins dense selon les caractéristiques de base des résines et durcisseurs employés.
On entend par résine époxy, désignée ci-après par E, tout composé organique possédant au moins deux fonctions de type oxirane, polymérisable par ouverture de cycle. Le terme "résines époxy" désigne toutes les résines époxy usuelles liquides à température ambiante (23°C) ou à température plus élevée. Ces résines époxy peuvent être monomériques ou polymériques d'une part, aliphatiques, cycloaliphatiques, hétérocycliques ou aromatiques d'autre part. A titre d'exemples de telles résines époxy, on peut citer le diglycidyl éther de résorcinol, le diglycidyl éther de bisphénol A, le triglycidyl p-amino phénol, le diglycidyléther de bromo-bisphénol F, le triglycidyléther de m-amino phénol, le tétraglycidyl méthylène dianiline, le triglycidyl éther de (trihydroxyphényl) méthane, les polyglycidyl éthers de phénol-formaldéhyde novolac, les polyglycidyls éthers d'orthocrésol novolac et les tétraglycidyl éthers de tétraphényl éthane. Des mélanges d'au moins deux de ces résines peuvent aussi être utilisés.
On préfère les résines époxy possédant au moins 1.5 fonctions oxirane par molécule et plus particulièrement les résines époxy contenant entre 2 et 4 fonctions oxirane par molécule. On préfère également les résines époxy possédant au moins un cycle aromatique comme les diglycidyls éthers de bisphénol A.
S'agissant du durcisseur de manière générale on utilise comme durcisseurs les durcisseurs des résines époxy qui réagissent à température ambiante ou à des températures supérieures à la température ambiante. A titre d'exemples non limitatif on peut citer :

- Les anhydrides d'acide, parmi lesquels l'anhydride succinique,
- Les polyamines aromatiques ou aliphatiques, parmi lesquelles la diamino diphényl sulphone (DDS) ou encore la méthylène dianiline ou encore la 4,4'-Méthylènebis-(3-chloro-2,6-diéthylaniline) (MCDEA),
- La dicyandiamide et ses dérivées.
- Les imidazoles
- Les acides polycarboxyliques
- Les polyphénols

**S'agissant du dibloc B-M** M est constitué de monomères de méthacrylate de méthyle ou contient au moins 50% en masse de méthacrylate de méthyle, de préférence au moins 75% en masse de méthacrylate de méthyle. Les autres monomères constituant le bloc M peuvent être des monomères acryliques ou non, être réactifs ou non. Par monomère réactif on entend : un groupement chimique capable de réagir avec les fonctions oxiranes des molécules époxy ou avec les groupements chimiques du durcisseurs. A titre d'exemples non limitatif de fonctions réactives on peut citer : les fonctions oxiranes, les fonctions amines, les fonctions carboxy. Le monomère réactif peut être l'acide (meth)acrylique ou tout autre monomère hydrolysable conduisant à ces acides. Parmi les autres monomères pouvant constituer le bloc M on peut citer à titre d'exemple non limitatif le méthacrylate de glycidyle le méthacrylate de tertiobutyle. Avantageusement M est constitué de PMMA syndiotactique à au moins 60%.
Avantageusement la Tg de B est inférieure à 0°C et de préférence inférieure à -40°C.

Le monomère utilisé pour synthétiser le bloc B élastomérique peut être un diène choisi parmi le butadiène, l'isoprène, le 2,3-diméthyl-1,3-butadiène, le 1,3-pentadiène, le 2-phényl-1,3-butadiène. B est choisi avantageusement parmi les poly(diènes) notamment poly(butadiène), poly(isoprène) et leurs copolymères statistiques, ou encore parmi les poly(diènes) partiellement ou totalement hydrogénés. Parmi les polybutadiènes on utilise avantageusement ceux dont la Tg est la plus faible, par exemple le polybutadiène-1,4 de Tg ( vers -90° C) inférieure à celle du polybutadiène-1,2. (vers 0° C). Les blocs B peuvent aussi être hydrogénés. On effectue cette hydrogénation selon les techniques habituelles.

Le monomère utilisé pour synthétiser le bloc B élastomérique peut être aussi un (meth)acrylate d'alkyle, on obtient les Tg suivantes entre parentheses suivant le nom de l'acrylate: l'acrylate d'éthyle (-24°C), l'acrylate de butyle, (-54°C), l'acrylate de 2-éihylhexyle (-85°C), l'acrylate d'hydroxyéthyle (-15°C) et le méthacrylate de 2-éthylhexyle (-10°C). On utilise avantageusement l'acrylate de butyle. Les acrylates sont différents de ceux du bloc M pour respecter la condition de B et M incompatibles.

De préférence les blocs B sont constitués en majorité de polybutadiène-1,4.

Le dibloc B-M a une masse molaire moyenne en nombre qui peut être comprise entre 10000 g/mol et 500000 g/mol, de préférence comprise entre 20000 et 200000 g/mol. Le dibloc B-M est avantageusement constitué d'une fraction massique en M comprise entre 5 et 95% et de préférence entre 15 et 85%.

**S'agissant du tribloc M-B-M,** M est constitué des mêmes monomères et éventuellement comonomères que le bloc M du dibloc B-M. Les deux blocs M du tribloc M-B-M peuvent être identiques ou différents. Ils peuvent être aussi différents par leur masse molaire mais constitués des mêmes monomères. Les blocs M du tribloc M-B-M peuvent être identiques ou différents du bloc M du dibloc B-M. Le bloc B est constitué des mêmes monomères et éventuellement comonomères que le bloc B du dibloc B-M. Les blocs B du tribloc M-B-M et du dibloc B-M peuvent être identiques ou différents.

Le tribloc M-B-M a une masse molaire moyenne en nombre qui peut être comprise entre 10000 g/mol et 500000 g/mol, de préférence comprise entre 20000 et 200000 g/mol. Avantageusement le tribloc M-B-M a les compositions suivantes en M et B exprimées en fraction massique, le total étant 100% :

M : entre 10 et 80% et de préférence entre 15 et 70%.
B : entre 90 et 20% et de préférence entre 85 et 30%.

**S'agissant du tribloc S-B-M,** M est constitué des mêmes monomères et éventuellement comonomères que le bloc M du dibloc B-M. Le bloc M du tribloc S-B-M, chaque bloc M du tribloc M-B-M et le bloc M du dibloc B-M peuvent être identiques ou différents. Le bloc B est constitué des mêmes monomères et éventuellement comonomères que le bloc B du dibloc B-M. Les blocs B du tribloc S-B-M, du tribloc M-B-M et du dibloc B-M peuvent être identiques ou différents.

La Tg ou la Tf de S est avantageusement supérieure à 23°C et de préférence supérieure à 50°C. A titre d'exemple de blocs S on peut citer ceux qui dérivent de composés vinylaromatiques tels que styrène, α-méthyl styrène, vinyltoluène, et celles qui dérivent d'alkyl esters des acides acrylique et/ou méthacrylique ayant de 1 à 18 atomes de carbone dans la chaîne alkyle. Dans ce dernier cas les acrylates sont différents de ceux du bloc M pour respecter la condition de S et M incompatibles.

Le tribloc S-B-M a une masse molaire moyenne en nombre qui peut être comprise entre 10000 g/mol et 500000 g/mol, de préférence comprise entre 20000 et 200000 g/mol. Le tribloc S-B-M avantageusement a la composition suivante exprimée en fraction massique, le total étant 100% :

M : entre 10 et 80% et de préférence entre 15 et 70%.
B : entre 2 et 80% et de préférence entre 5 et 70%.
S : entre 10 et 88% et de préférence entre 15 et 85%.

Les copolymères blocs utilisés dans les matériaux de la présente invention peuvent être fabriqués par polymérisation anionique par exemple selon les procédés décrits dans les demandes de brevet EP 524.054 et EP 749.987.

Avantageusement la proportion de modifiant choc est de 1 à 35% pour respectivement 99 à 65% de résine thermodure.

De préférence la proportion de modifiant choc est de 8 à 32% pour respectivement 92 à 68% de résine thermodure.

**Selon une forme préférée de l'invention** le modifiant choc comprend au moins un des copolymères blocs M-B-M, S-B-M et au moins un polymère choisi parmi les coeur- écorce (A), les élastomères fonctionnalisés, les copolymères blocs S-B et les caoutchoucs reactifs ATBN et CTBN.

**S'agissant du dibloc S-B** les blocs S et B sont incompatibles et ils sont constitués des mêmes monomères et éventuellement comonomères que les blocs S et les blocs B du tribloc S-B-M. Les blocs S et B peuvent être identiques ou différents des autre blocs S et B présents dans les autres copolymères blocs du modifiant choc dans le matériau thermodur.

Le dibloc S-B a une masse molaire moyenne en nombre qui peut être comprise entre 10000 g/mol et 500000 g/mol, de préférence comprise entre 20000 et 200000 g/mol. Le dibloc S-B est avantageusement constitué d'une fraction massique en B comprise entre 5 et 95% et de préférence entre 15 et 85%.

**S'agissant du copolymère coeur - écorce (A)** il se présente sous la forme de fines particules ayant un coeur en élastomère et au moins une écorce thermoplastique, la taille des particules est en général inférieure au µm et avantageusement comprise entre 50 et 500 nm. A titre d'exemple de coeur on peut citer les homopolymères de l'isoprène ou du butadiène, les copolymères de l'isoprène avec au plus 30% en moles d'un monomère vinylique et les copolymères du butadiène avec au plus 30% en moles d'un monomère vinylique. Le monomère vinylique peut être le styrène, un alkylstyrène, l'acrylonitrile ou un (meth)acrylate d'alkyle. Une autre famille de coeur est constituée par les homopolymères d'un (meth)acrylate d'alkyle et les copolymères d'un (meth)acrylate d'alkyle avec au plus 30% en moles d'un monomère vinylique. Le (meth)acrylate d'alkyle est avantageusement l'acrylate de butyle. Le monomère vinylique peut être le styrène, un alkylstyrène, l'acrylonitrile, le butadiène ou l'isoprène. Le coeur du copolymère (A) peut être réticulé en tout ou partie. Il suffit d'ajouter des monomères au moins difonctionnels au cours de la préparation du coeur, ces monomères peuvent être choisis parmi les esters poly(meth)acryliques de polyols tels que le di(meth) acrylate de butylène et le trimethylol propane trimethacrylate. D'autres monomères difonctionnels sont par exemple le divinylbenzène, le trivinylbenzène, l'acrylate de vinyle et le methacrylate de vinyle. On peut aussi réticuler le coeur en y introduisant, par greffage ou comme comonomère pendant la polymérisation, des monomères fonctionnels insaturés tels que des anhydrides d'acides carboxyliques insaturés, des acides carboxyliques insaturés et des époxydes insaturés. On peut citer à titre d'exemple l'anhydride maleique, l'acide (meth)acrylique et le méthacrylate de glycidyle.

L'écorce ou les écorces sont des homopolymères du styrène, d'un alkylstyrène ou du méthacrylate de méthyle ou des copolymères comprenant au moins 70% en moles de l'un de ces monomères précédents et au moins un comonomère choisi parmi les autres monomères précédents, l'acétate de vinyle et l'acrylonitrile. L'écorce peut être fonctionnalisée en y introduisant, par greffage ou comme comonomère pendant la polymérisation, des monomères fonctionnels insaturés tels que des anhydrides d'acides carboxyliques insaturés, des acides carboxyliques insaturés et des époxydes insaturés. On peut citer à titre d'exemple l'anhydride maleique, l'acide (meth)acrylique et le méthacrylate de glycidyle. A titre d'exemple on peut citer des copolymères coeur - écorce (A) ayant une écorce en polystyrène et des copolymères coeur - écorce (A) ayant une écorce en PMMA. Il existe aussi des copolymères coeur - écorce (A) ayant deux écorces , l'une en polystyrène et l'autre à l'extérieur en PMMA. Des exemples de copolymère (A) ainsi que leur procédé de préparation sont décrits dans les brevets suivants : US 4 180 494, US 3 808 180, US 4096 202, US 4 260 693, US 3 287 443, US 3 657 391, US 4 299 928, US 3 985 704.

Avantageusement le coeur représente, en poids, 70 à 90% de (A) et l'écorce 30 à 10%.

A titre d'exemple de copolymère (A) on peut citer celui constitué (i) de 75 à 80 parties d'un coeur comprenant en moles au moins 93% de butadiène, 5% de styrène et 0,5 à 1% de divinylbenzène et (ii) de 25 à 20 parties de deux écorces essentiellement de même poids l'une intérieure en polystyrène et l'autre extérieure en PMMA.

**Selon une deuxième forme préférée de l'invention** le modifiant choc comprend au moins un copolymère bloc S-B-M et au moins un copolymère bloc S-B. Le modifiant choc comprend avantageusement entre 5 et 80% de dibloc S-B pour respectivement de 95 à 20% de tribloc S-B-M.

De plus l'avantage de ces compositions est qu'il n'est pas nécessaire de purifier le S-B-M à l'issue de sa synthèse. En effet les S-B-M sont en général préparés à partir des S-B et la réaction conduit souvent à un mélange de S-B et S-B-M qu'on sépare ensuite pour disposer de S-B-M.

**Selon une troisième forme préférée de l'invention** le modifiant choc comprend au moins un copolymère blocs S-B-M et au moins un polymère coeur- écorce (A). La proportion de coeur écorce par rapport au S-B-M peut être comprise entre 5 pour 1 et 1 pour 4, et de préférence entre 3 pour 1 et 1 pour 2.

**Selon une quatrième forme préférée de l'invention** le modifiant choc comprend au moins un copolymère blocs S-B-M et au moins un caoutchouc réactif ATBN ou CTBN. La proportion de caoutchouc réactif par rapport au S-B-M peut être comprise entre 5 pour 1 et 1 pour 4, et de préférence entre 3 pour 1 et 1 pour 2.

Selon une forme avantageuse une partie du S-B-M peut être remplacée par un dibloc S-B. Cette partie peut être jusqu'à 70% en poids du S-B-M.

On ne sortirait pas du cadre de l'invention en remplaçant tout ou partie du tribloc S-B-M par un pentabloc M-S-B-S-M ou M-B-S-B-M. Ils peuvent être préparés par polymérisation anionique comme les di ou triblocs cités plus haut mais en utilisant un amorceur difonctionnel. La masse molaire moyenne en nombre de ces pentablocs est dans les mêmes intervalles que celle des triblocs S-B-M. La proportion des deux blocs M ensemble, des deux blocs B ou S ensemble est dans les mêmes intervalles que les proportions de S, B et M dans le tribloc S-B-M.

Les matériaux de l'invention peuvent être préparés par mélange de la résine thermodure non encore réticulée et du modifiant choc à l'aide d'un dispositif de mélange conventionnel.

S'agissant des résines époxy les matériaux de l'invention à faible pourcentage en modifiant choc (≤10% en masse) peuvent être préparés à l'aide d'un réacteur agité conventionnel. La résine époxy thermodurcissable est introduite dans le réacteur et portée quelques minutes à une température suffisante pour être fluide. Le modifiant choc comprenant les copolymères blocs est ensuite ajouté et malaxé à une température suffisante pour être fluide jusqu'à sa dissolution complète. Le temps de malaxage dépend de la nature du copolymère ajouté. On ajoute alors le durcisseur et on mélange pendant encore 5 minutes à une température suffisante pour être fluide pour obtenir un mélange homogène. La réaction époxy-durcisseur commence durant ce mélangeage et il doit donc être fixé aussi court que possible. Ces mélanges sont ensuite coulés et cuits dans un moule.

Pour les matériaux avec un taux de modifiant choc supérieur à 10% en masse, un pré-mélange de la résine thermodurcissable et du modifiant choc contenant 10% en masse de modifiant choc est réalisé selon la méthode suivante : après avoir porté la résine thermodurcissable à une température suffisante pour être fluide pendant quelques minutes, le modifiant choc est ajouté et mélangé à une température suffisante pour être fluide jusqu'à sa dissolution complète. La masse de modifiant choc manquant pour atteindre le taux désiré est alors mélangé à ce pré-mélange à l'aide d'une calandre ou d'un mélangeur bi-vis à une température suffisante pour être fluide pendant une heure. Le système résine thermodurcissable modifiant choc obtenu est alors refroidi et cryobroyé et le durcisseur est ajouté. Le mélange final est pressé dans un moule à la température de cuisson désirée.

Conditions de cuisson:

Ce sont les conditions habituelles.

On ne sortirait pas du cadre de l'invention en ajoutant dans les matériaux thermodurs les additifs habituels/

[Exemples]

On a utilisé les produits suivants :

Résine époxy: il s'agit d'un éther diglycidique du Bisphénol A (DGEBA) de masse molaire 383 g/mol avec un nombre moyen de groupe hydroxyle pour un groupe époxy de n= 0.075, commercialisé par la société Ciba Geigy sous la référence commerciale LY556.

Durcisseur: il s'agit d'un durcisseur amine qui est une diamine aromatique, la 4,4'-Méthylènebis-(3-chloro-2,6-diéthylaniline) commercialisé par la société Lonza sous la référence commerciale LONZACURE M-CDEA. Ce produit est caractérisé par un point de fusion compris entre 87°C et 90°C et une masse molaire de 380 g/mol.

Modifiants choc

**PB** (Polybutadiène) : il s'agit d'un homopolymère de butadiène obtenu par synthèse anionique à l'aide d'un amorceur butyl lithium secondaire, de masse molaire moyenne en nombre 42000 g/mol. Ce produit a été préparé suivant le mode opératoire décrit dans EP 524-054 et dans EP 749.987. Il est caractérisé par une transition vitreuse de -90°C.

**PMMA** (Polyméthacrylate de méthyle) : il s'agit d'un homopolymère de méthacrylate de méthyle fortement syndiotactique (72%), obtenu par synthèse anionique à l'aide d'un amorceur butyl lithium secondaire, de masse molaire moyenne en nombre 54000 g/mol. Il est caractérisé par une transition vitreuse de 132°C.

**BM1**: il s'agit d'un copolymère dibloc B-M dans lequel B est le polybutadiène et M le PMMA contenant 35% en fraction massique de Polybutadiène et 65% en masse de Polyméthacrylate de méthyle, obtenu par polymérisation anionique successivement d'un bloc polybutadiène de masse 42000 g/mol et d'un bloc polyméthacrylate de méthyle de masse molaire moyenne en nombre 75000 g/mol. Ce produit a été préparé suivant le mode opératoire décrit dans EP 524-054 et dans EP 749.987. Ce produit présente deux transitions vitreuses, l'une de -90°C et l'autre de 132°C.

**SB1** : il s'agit d'un copolymère dibloc S-B dans lequel S est du polystyrène et B du polybutadiène contenant 29% en fraction massique de Polybutadiène et 71% en masse de Polystyrène, obtenu par polymérisation anionique successivement d'un bloc polystyrène de masse molaire moyenne en nombre 27000 g/mol et d'un bloc polybutadiène de masse 11000 g/mol. Ce produit a été préparé suivant le mode opératoire décrit dans EP 524-054 et dans EP 749.987. Ce produit présente deux transitions vitreuses, l'une de - 90°C et l'autre de 95°C.

**SB2:** il s'agit d'un copolymère dibloc S-B dans lequel S est du polystyrène et B du polybutadiène contenant 65% en fraction massique de Polybutadiène et 35% en masse de Polystyrène, obtenu par polymérisation anionique successivement d'un bloc polystyrène de masse molaire moyenne en nombre 14000 g/mol et d'un bloc polybutadiène de masse 22000 g/mol. Ce produit a été préparé suivant le mode opératoire décrit dans EP 524-054 et dans EP 749.987. Ce produit présente deux transitions vitreuses, l'une de - 90°C et l'autre de 95°C.

**SB3** : il s'agit d'un copolymère dibloc S-B dans lequel S est du polystyrène et B du polybutadiène contenant 52% en fraction massique de Polybutadiène et 48% en masse de Polystyrène, obtenu par polymérisation anionique successivement d'un bloc polystyrène de masse molaire moyenne en nombre 21000 g/mol et d'un bloc polybutadiène de masse 22000 g/mol. Ce produit a été préparé suivant le mode opératoire décrit dans EP 524-054 et dans EP 749.987. Ce produit présente deux transitions vitreuses, l'une de - 90°C et l'autre de 95°C.

**Core-shell-1** (CS1) : il s'agit de particules coeur-écorce préformées constituées d'un coeur majoritairement constitué de polybutadiène de diamètre compris entre 80 et 120 nanomètres et d'une écorce à base de méthacrylate de méthyle commercialisé par la société Métablen sous la référence C140.

**PCL-PDMS-PCL** :Copolymère  Polycaprolactone-Polysiloxane-Polycaprolactone  de  type  tribloc PCL-PDMS-PCL :

il s'agit d'un copolymère tribloc produit et commercialisé par la société Goldschmidt sous la référence Tegomer H-Si 6440. Il a une masse molaire de 6500 g/mol.

**SBM1** : il s'agit d'un copolymère tribloc S-B-M dans lequel S est du polystyrène, B est du polybutadiène et M du PMMA contenant 22% en fraction massique de Polystyrène, 9% en fraction massique de Polybutadiène et 69% en masse de polyméthacrylate de méthyle, obtenu par polymérisation anionique successivement d'un bloc polystyrène de masse molaire moyenne en nombre 27000 g/mol, d'un bloc polybutadiène de masse 11000 g/mol et d'un bloc polyméthacrylate de méthyle de masse molaire moyenne en nombre 84000 g/mol. Ce produit a été préparé suivant le mode opératoire décrit dans EP 524-054 et dans EP 749.987. Ce produit présente trois transitions vitreuses, l'une de -90°C, l'autre de 95°C et la troisième de 130°C.

**SBM2** : il s'agit d'un copolymère tribloc S-B-M dans lequel S est du polystyrène, B est du polybutadiène et M du PMMA contenant 12% en fraction massique de Polystyrène, 18% en fraction massique de Polybutadiène et 70% en masse de polyméthacrylate de méthyle, obtenu par polymérisation anionique successivement d'un bloc polystyrène de masse molaire moyenne en nombre 14000 g/mol, d'un bloc polybutadiène de masse 22000 g/mol et d'un bloc polyméthacrylate de méthyle de masse molaire moyenne en nombre 85000 g/mol. Ce produit a été préparé suivant le mode opératoire décrit dans EP 524-054 et dans EP 749.987. Ce produit présente trois transitions vitreuses, l'une de -90°C, l'autre de 95°C et la troisième de 130°C.

**SBM3** : il s'agit d'un copolymère tribloc S-B-M dans lequel S est du polystyrène, B est du polybutadiène et M du PMMA contenant 24% en fraction massique de Polystyrène, 26% en fraction massique de Polybutadiène et 50% en masse de polyméthacrylate de méthyle, obtenu par polymérisation anionique successivement d'un bloc polystyrène de masse molaire moyenne en nombre 21000 g/mol, d'un bloc polybutadiène de masse 22000 g/mol et d'un bloc polyméthacrylate de méthyle de masse molaire moyenne en nombre 43000 g/mol. Ce produit a été préparé suivant le mode opératoire décrit dans EP 524-054 et dans EP 749.987. Ce produit présente trois transitions vitreuses, l'une de -90°C, l'autre de 95°C et la troisième de 130°C.

Réalisation des mélanges contenant seulement des Core-Shell comme modifiant choc:

Les particules coeur-écorce sont dispersées dans la DGEBA à l'aide d'un uttra-turax à 5000 tours/min. Les cycles sont de 10 minutes de mélangeage suivies de 10 minutes de repos, le temps final de dispersion étant de 3 heures. D'autre part, le récipient contenant DGEBA et Core-Shell est continuellement plongé dans un bain de glace pour éviter tout échauffement. Le mélange est alors porté à 100°C (au-dessus de la température de fusion de l'amine) et la diamine est dispersée pendant 10 minutes à l'aide de l'ultra-turax à 5000 tours/minute. Le mélange est ensuite coulé dans un moule et cuit.

Réalisation des autres mélanges

Les mélanges à faible pourcentage en modifiant choc (≤10% en masse) ont été préparés à l'aide d'un réacteur. La DGEBA est introduite dans le réacteur et portée quelques minutes à 135°C. Le modifiant choc est ensuite ajouté et malaxé à 135°C jusqu'à sa dissolution complète. Le temps de malaxage dépend de la nature du modifiant choc ajouté. Dans notre cas, il était au maximum de 12 heures. On ajoute alors le durcisseur diamine et on mélange pendant encore 5 minutes à 135°C pour obtenir un mélange homogène. La réaction époxy-amine commence durant ce mélangeage et il doit donc être fixé aussi court que possible. Ces mélanges sont ensuite coulés et cuits dans un moule. Pour les mélanges avec un taux de modifiant choc supérieur à 10% en masse, un pré-mélange DGEBA-modifiant choc contenant 10% en masse de modifiant choc est réalisé selon la méthode suivante : après avoir porté la DGEBA à 135°C pendant quelques minutes, le modifiant choc est ajouté et mélangé à 135°C jusqu'à sa dissolution complète. La masse de modifiant choc manquant pour atteindre le taux désiré est alors mélangé à ce pré-mélange à l'aide d'une calandre ou d'un mélangeur bi-vis à 135°C pendant une heure. Le système DGEBA-modifiant choc obtenu est alors refroidi et cryobroyé et la poudre d'amine est ajoutée. Le mélange final est pressé dans un moule à la température de cuisson désirée.

Conditions de cuisson :

Les mélanges à 10% d'additifs sont précuits pendant 14 heures à 135°C et post-cuits pendant 4 heures à 190°C.

Les mélanges à 30% d'additifs sont précuits pendant 20 heures à 135°C et post-cuits pendants 4 heures à 190°C.

Mesure du renforcement au choc - mesure de K1C

La mesure du KIC a été réalisée à température ambiante sur des échantillons entaillés de flexion trois points suivant la procédure proposée par Williams et Cawood (Polymer Testing, 9 (1990) 15-26). Les éprouvettes sont pré entaillées avec une scie diamantée. Une fissure plus fine est réalisée sur les échantillons, serrés dans un étau, à l'aide d'une lame de rasoir sur laquelle on donne un léger choc provoquant la fissuration. Cela permet d'obtenir un fond de fissure très fin, proche d'une fissure naturelle. La profondeur de l'entaille totale est mesurée à l'aide d'une loupe binoculaire.

Mesure de la température de transition vitreuse, Tg par analyse thermomécanique:

Le mesure de Tg a été réalisée par analyse mécanique dynamique sur les échantillons post-cuits à l'aide d'un appareil Rhéométrics (Rheometrics Solid Analyser RSAII). Les échantillons de forme parallélépipédiques ($1*2.5*34mm^3$) sont soumis à un balayage en température entre 50 et 250°C à une fréquence de traction de 1Hz. La température de transition vitreuse est prise au maximum de tan $\delta$.

Mesure de gonflement :

Un échantillon de forme parallélépipédique de dimension 20x20x1 mm est placé dans un bêcher de 100ml rempli de toluène pendant une durée de 15 jours. Le bécher est maintenu hermétiquement clos, à température ambiante. Après 15 jours d'immersion l'échantillon est prélevé et sa masse contrôlée. Le pourcentage de gonflement est obtenu par l'équation suivante :

$$\%gonflement = (m15jours- minitiale) / minitiale$$

L'échantillon est ensuite séché et pesé à nouveau afin de contrôler qu'aucun des constituants du matériau n'a été solubilisé par le toluène.

**Exemple 1 : Intérêt des diblocs BM et des triblocs SBM par rapport aux autres additifs connus.**

Les différentes formulations reportées dans le tableau 1 ont été préparées suivant le protocole expérimental décrit précédemment. Les résultats sont dans le tableau 2.

Commentaires :

Le matériau thermodur non renforcé (témoin 1) est un matériau transparent, de très haute Tg mais fragile. L'addition d'homopolymère Polybutadiène à hauteur de 5 ou 10% présente une difficulté. Lors de l'étape d'incorporation de l'homopolymère à la DGEBA, la dissolution du premier dans le deuxième n'est pas parfaite. On n'obtient pas un mélange parfaitement homogène. Après cuisson le matériau est opaque et présente un renforcement quasiment nul (témoin 2 et 3). En revanche, l'incorporation d'homopolymère PMMA est aisée. Le mélange PMMA/DGEBA est homogène et transparent, le matériau reste parfaitement transparent après cuisson. Le matériau ne présente cependant aucun renforcement significatif que l'on ajoute 5% ou 10% de PMMA (témoins 4 et 5). Le témoin 5 a une Tg inférieure à celle du matériau de référence (témoin 1), 174°C et 187°C respectivement Cet abaissement est relativement limité. L'addition de 5 ou 10% de Core shell (témoins 6 et 7) ne présent pas de difficulté, le mélange intial a un aspect homogène. Après cuisson le matériau a une Tg élevée très proche de celle de la référence, mais la matériau est devenu opaque et aucun renforcement au choc n'est observé. Les résultats obtenus avec ces différents matériaux confirment qu'il est difficile de renforcer un matériau thermodur de haute Tg, en conservant sa transparence et en n'abaissant pas significativement sa température de transition vitreuse.

Il est surprenant de constater que l'addition de dibloc B-M PMMA-*b*-PB conduit à un matériau renforcé par rapport au matériau additivé de PB, de PMMA ou de Core-shell. En effet, le matériau de l'essai 1 a un $K_1C$ de 0.95

alors que tous les témoins ont un $K_1C$ compris entre 0.6 et 0.7 très voisin du matériau époxy pur.

Il est à noter que le renforcement obtenu avec le dibloc PMMA-*b*-PB ne peut pas être obtenu avec n'importe quel dibloc puisque le matériau de l'essai 2 réalisé avec un dibloc S-B PS-*b*-PB ne présente aucun renforcement. Il est également à noter que l'incorporation du dibloc PS-*b*-PB n'est pas aisée et que le matériau après cuisson est opaque.

L'addition d'un dibloc B-M PMMA-*b*-PB conduit non seulement à un renforcement de la matrice époxy mais elle permet de plus de conserver la transparence du matériau ce qui est crucial dans certaines application de ces matériaux.

L'essai 3 réalisé avec un additif tel que décrit dans l'art antérieur le plus proche, un copolymère à bloc de type Polycaprolactone-*b*-Polydiméthylsiloxane-*b*-Polycaprolactone, conduit à un matériau transparent, bien que l'incorporation de l'additif présente une difficulté: le mélange DGEBA/additif a tendance à mousser lors de la phase d'incorporation ce qui contraint l'utilisateur a arrêter fréquemment l'agitation pour laisser retomber la mousse formée. Ce matériau présente un bon renforcement au choc comme décrit dans l'art antérieur. La Tg du matériau est de 164°C. Cette Tg est égale à celle du matériau réalisé au cours de l'essai 1 avec le dibloc PMMA-*b*-PB. A Tg égales, nous constatons que le dibloc B-M PMMA-*b*-PB conduit à un renforcement supérieur (K1C=0.95) à celui apporté par le copolymère à bloc Polycaprolactone-*b*-Polydiméthylsiloxane-*b*-Polycaprolactone (K1C=0.85). Cet écart est bien supérieur à l'erreur expérimentale et démontre donc la supériorité de cet additif par rapport à ceux décrits précédemment.

Les essais 4, 5, 6 réalisés avec des copolymères tribloc S-B-M PMMA-*b*-PB-*b*-PS conduisent tous à des matériaux transparents. L'incorporation de l'additif ne présente aucune difficulté. Nous avons constaté que les matériaux réalisés présentent des Tg supérieures à celles des matériaux des essais 1 et 3 ce qui est un avantage important. Ces hautes Tg ne sont pas obtenues au détriment du renforcement puisque l'essai 6 présente le meilleur renforcement que nous ayons obtenu.

Conclusion :

Les copolymères à blocs comprenant un bloc M en PMMA (PMMA-*b*-PB et PMMA-*b*-PB-*b*-PS) conduisent à un renforcement significatif de la matrice et préservent la transparence du matériau. Par rapport aux copolymères de natures chimiques différentes décrits dans l'art antérieur, ces copolymères permettent d'obtenir soit un renforcement supérieur et une Tg plus élevée ,soit une Tg égale et un renforcement supérieur. Ces résultats illustrent l'intérêt de l'invention.

Tableau 1

| Référence | DGEBA | Amine | Modifiant choc (Nature) | Modifiant choc (Masse) | Modifiant choc (%) poids |
|-----------|-------|-------|-------------------------|------------------------|--------------------------|
| Témoin 1 | 80.21 | 39.84 | aucun | | |
| Témoin 2 | 76.17 | 37.83 | PB | 5.98 | 5 |
| Témoin 3 | 60.14 | 29.88 | PB | 10.08 | 10 |
| Témoin 4 | 76.15 | 37.82 | PMMA | 6.02 | 5 |
| Témoin 5 | 78.18 | 38.82 | PMMA | 13 | 10 |
| Témoin 6 | 165.03 | 81.96 | Core-shell.1 | 13 | 5 |
| Témoin 7 | 156.34 | 77.58 | Core-shell.1 | 26.03 | 10 |
| Essai 1 | 72.19 | 35.89 | BM1 | 11.97 | 10 |
| Essai 2 camp | 72.25 | 35.89 | SB1 | 11.96 | 10 |
| Essai 3 comp | 72.15 | 35.83 | PCL-PDMS-PCL | 12.05 | 10 |
| Essai 4 | 72.12 | 35.83 | SBM.1 | 12 | 10 |
| Essai 5 | 72.11 | 35.85 | SBM.2 | 12 | 10 |
| Essai 6 | 72.15 | 35.85 | SBM.3 | 12 | 10 |

Tableau 2

| Référence | Modifiant choc (Nature) | Modifiant choc (%) | Transparence | K1C | Tg |
|---|---|---|---|---|---|
| Témoin 1 | aucun | | Oui | 0.65 | 187 |
| Témoin 2 | PB | 5 | Non | 0.65 | |
| Témoin 3 | PB | 10 | Non | 0.7 | |
| Témoin 4 | PMMA | 5 | Oui | 0.65 | |
| Témoin 5 | PMMA | 10 | Oui | 0.65 | 174 |
| Témoin 6 | Core-shell-1 | 5 | Non | 0.66 | 182 |
| Témoin 7 | Core-shell-1 | 10 | Non | 0.7 | 183 |
| Essai 1 | BM1 | 10 | Oui | 0.95 | 164 |
| Essai 2 comp | SB1 | 10 | Non | 0.65 | |
| Essai 3 comp | PCL-PDMS-PCL | 10 | Oui | 0.85 | 164 |
| Essai 4 | SBM.1 | 10 | Oui | 0.77 | 175 |
| Essai 5 | SBM.2 | 10 | Oui | 0.88 | 178 |
| Essai 6 | SBM.3 | 10 | Oui | 1.01 | 184 |

**Exemple 2 : Effets de synergie apportés par les SBM**

Les différentes formulations reportées dans le tableau 3 ont été préparées suivant le protocole expérimental décrit précédemment. Les résultats obtenus sont reportés dans le tableau 4.

Commentaires :

Nous constatons un comportement très singulier des mélanges constitués de deux copolymères diblocs dont au moins l'un des deux copolymères contient un bloc PMMA. En effet, les matériaux réalisés à partir d'un mélange d'un dibloc S-B et d'un dibloc B-M ne présentent pas de renforcement significatif par rapport au matériau époxy non additivé alors que comme nous l'avons vu précédemment les matériaux réalisés à partir de dibloc B-M PMMA-*b*-PB présentent un renforcement significatif. De plus, le matériau n'est pas transparent.

En revanche, les trois matériaux réalisés à partir d'un mélange d'un dibloc PS-*b*-PB (S-B) et d'un tribloc PS-*b*-PB-*b*-PMMA (S-B-M) présentent un renforcement significatif et de manière surprenante nous constatons que dans les trois cas étudiés (essai 9, 10 et 11) le matériau qui contient 10% d'additif (S-B)+S-B-M a une résistance plus importante que le matériau réalisé à partir de 10% de tribloc S-B-M alors que le S-B utilisé seul n'a aucun effet renforçant. Nous en concluons qu'il existe un effet de synergie surprenant. Cet effet est d'autant plus intéressant que la transparence du matériau est préservée. La mesure de la Tg des matériaux montre que l'addition d'un mélange S-B+S-B-M a un effet minime sur la transition vitreuse du matériau. L'invention permet d'obtenir un renforcement significatif sans perte de la transparence et avec une réduction minime de la température d'utilisation du matériau.

L'essai 11 est également particulièrement intéressant et surprenant Alors que le Core-shell.1 n'apporte aucun effet renforçant qu'il soit ajouté à hauteur de 5 ou 10 % (Témoins 6 et 7) lorsqu'il est ajouté à hauteur de 5% avec 5% de tribloc S-B-M, le matériau obtenu a une résistance au choc exceptionnelle ($K_{1C}$= 1.4). Nous constatons donc à nouveau un effet de synergie particulièrement surprenant apporté par le tribloc S-B-M.

Tableau 3

| Référence | DGEBA | Amine | Modifiant choc (Nature) | Modifiant choc (Masse) | Modifiant choc (%) poids |
|---|---|---|---|---|---|
| Essai 7 comp | | | BM1 + SB3 | | 7 + 3 |
| Essai 8 | 81 | 40.23 | SBM1 + SB1 | 10.78 +2.7 | 8 + 2 |

Tableau 3   (suite)

| Référence | DGEBA | Amine | Modifiant choc (Nature) | Modifiant choc (Masse) | Modifiant choc (%) poids |
|---|---|---|---|---|---|
| Essai 9 | 80.99 | 40.23 | SBM2 + SB2 | 10.78 +2.7 | 9 + 1 |
| Essai 10 | 72.16 | 35.82 | SBM3 + SB3 | 7.81 +4.21 | 6.5 +3.5 |
| Essai 11 | 156.38 | 77.64 | SBM2 + Core-shell.1 | 13.03 +13 | 5 +5 |

Tableau 4

| Référence | Modifiant choc (Nature) | Modifiant choc (%) | Transparence | K1C | Tg |
|---|---|---|---|---|---|
| Essai 7 comp | BM1 + SB3 | 7 + 3 | non | pas de renf | |
| Essai 8 | SBM1 + SB1 | 8 + 2 | Oui | 0.81 | 178°C |
| Essai 9 | SBM2 + SB2 | 9 + 1 | Oui | 0.96 | 183°C |
| Essai 10 | SBM3 + SB3 | 6.5 + 3.5 | Oui | 1.04 | |
| Essai 11 | SBM2 + Core-shell.1 | 5 + 5 | Non | 1.4 | |

## Exemple 3 : Intérêt de l'augmentation du pourcentage d'additifs

Les différentes formulations reportées dans le tableau 5 ont été préparées suivant le protocole expérimental décrit précédemment Les résultats obtenus sont reportés dans le tableau 6.

Commentaires :

Par rapport au Témoin 1 qui ne contient pas d'additifs, les essais 12 et 13 qui contiennent un mélange de tribloc PS-*b*-PB-*b*-PMMA (S-B-M) et de dibloc PS-*b*-PB (S-B) à hauteur de 30% présentent un renforcement au choc très important. Ce renforcement est bien supérieur aux niveaux obtenus avec ces additifs ou avec d'autres introduits à hauteur de 10%. Nous constatons que l'introduction de cette quantité significative d'additifs ne perturbe pas la transparence du matériau final.

D'autre part, une caractéristique essentielle d'un matériau thermodur à base d'époxy est sa résistance aux solvants. Il est important que le matériau soit bien sûr non soluble mais qu'en plus il présente un gonflement limité dans les solvants. Pour cela nous avons choisi le toluène qui est un solvant qui ne gonfle pas le matériau epoxy témoin et qui en revanche est un excellent solvant des triblocs S-B-M et des diblocs S-B. Ce test est donc particulièrement sévère. Le gonflement dans le toluène des matériaux obtenus lors des essais 12 et 13 ont été déterminés suivant la méthode décrite précédemment. Non seulement nous observons que les additifs ne sont pas extraits par une immersion prolongée du matériau dans le toluène, mais nous constatons de plus que ces matériaux présentent un gonflement aussi faible que le matériau époxy pur de référence. Par conséquent, l'addition de 30% d'additif tels que décrits dans la présente invention n'a aucun effet néfaste sur la résistance au gonflement dans le toluène du matériau et permet un renforcement considérable.

Tableau 5

| Référence | DGEBA | Amine | Modifiant choc (Nature) | Modifiant choc (Masse) | Modifiant choc (%) poids |
|---|---|---|---|---|---|
| Témoin 1 | 80.21 | 39.84 | aucun | | |
| Essai 12 | 70.01 | 34.77 | SBM1 + SB1 | 35.87 +8.97 | 24 + 6 |

Tableau 5   (suite)

| Référence | DGEBA | Amine | Modifiant choc (Nature) | Modifiant choc (Masse) | Modifiant choc (%) poids |
|---|---|---|---|---|---|
| Essai 13 | 73.15 | 36.33 | SBM2<br>+ SB2 | 42.15<br>+4.68 | 27<br>+ 3 |

Tableau 6

| Référence | Modifiant choc (Nature) | Modifiant choc (%) poids | Transparence | K1C | Taux de Gonflement dans le toluène |
|---|---|---|---|---|---|
| Témoin 1 | aucun | | oui | 0.65 | 1 % |
| Essai 12 | SBM1<br>+ SB1 | 24<br>+6 | oui | 1.53 | 1 % |
| Essai 13 | SBM2<br>+ SB2 | 27<br>+ 3 | oui | 1.27 | 1 % |

**Revendications**

**1.** Matériau thermodur à tenue au choc améliorée comprenant :

- 99 à 20% d'une résine thermodure,
- 1 à 80% d'un modifiant choc comprenant au moins un copolymère choisi parmi les copolymères à blocs S-B-M, B-M et M-B-M dans lesquels:

  ➤ chaque bloc est relié à l'autre au moyen d'une liaison covalente ou d'une molécule intermédiaire reliée à l'un des blocs par une liaison covalente et à l'autre bloc par une autre liaison covalente,
  ➤ M est un PMMA homopolymère ou un copolymère comprenant au moins 50% en poids de méthacrylate de méthyle,
  ➤ B est incompatible avec la résine thermodure et avec le bloc M et sa température de transition vitreuse Tg est inférieure à la temp d'utilisation du matériau thermodur,
  ➤ S est incompatible avec la résine thermodure, le bloc B et le bloc M et sa Tg ou sa température de fusion Tf est supérieure à la Tg de B.

**2.** Matériau selon la revendication 1 dans lequel les blocs M des copolymères à blocs sont constitués de PMMA syndiotactique à au moins 60%.

**3.** Matériau selon la revendication 1 ou 2 dans lequel les blocs M des copolymères à blocs comprennent des monomères réactifs, avantageusement le méthacrylate de glycidyle ou le méthacrylate de tertiobutyle.

**4.** Matériau selon l'une quelconque des revendications précédentes dans lequel la Tg des blocs B des copolymères à blocs est inférieure à 0°C.

**5.** Matériau selon la revendication 4 dans lequel la Tg des blocs B des copolymères à blocs est inférieure à -40°C.

**6.** Matériau selon la revendication 5 dans lequel les blocs B des copolymères à blocs sont constitués en majorité de polybutadiène-1,4.

**7.** Matériau selon l'une quelconque des revendications 4 à 6 dans lequel les diènes du bloc B sont hydrogénés.

**8.** Matériau selon la revendication 4 dans lequel le bloc B est constitué de poly(acrylate de butyle).

**9.** Matériau selon l'une quelconque des revendications précédentes dans lequel la Tg ou la Tf de S est supérieure à 23°C.

**10.** Matériau selon la revendication 9 dans lequel la Tg ou la Tf de S est supérieure à 50°C.

**11.** Matériau selon la revendication 10 dans lequel S est du polystyrène.

**12.** Matériau selon l'une quelconque des revendications précédentes dans lequel la masse molaire moyenne en nombre des copolymères à blocs peut être comprise entre 10000 g/mol et 500000 g/mol.

**13.** Matériau selon la revendication 12 dans lequel la masse molaire moyenne en nombre des copolymères à blocs peut être comprise entre 20000 g/mol et 200000 g/mol.

**14.** Matériau selon l'une quelconque des revendications précédentes dans lequel la proportion de modifiant choc est de 1 à 35% pour respectivement 99 à 65% de résine thermodure.

**15.** Matériau selon la revendication 14 dans lequel la proportion de modifiant choc est de 8 à 32% pour respectivement 92 à 68% de résine thermodure.

**16.** Matériau selon l'une quelconque des revendications précédentes dans lequel le modifiant choc comprend au moins un des copolymères blocs M-B-M, S-B-M et au moins un polymère choisi parmi les coeur- écorce (A), les élastomères fonctionnalisés, les copolymères blocs S-B et les caoutchoucs réactifs ATBN ou CTBN.

**17.** Matériau selon la revendication 16 dans lequel les blocs S et B du dibloc S-B sont ceux des revendications 1 et 4 à 11.

**18.** Matériau selon la revendication 17 dans lequel le dibloc S-B a une masse molaire moyenne en nombre qui peut être comprise entre 10000 g/mol et 500000 g/mol.

**19.** Matériau selon l'une quelconque des revendications 16 à 18 dans lequel le modifiant choc comprend au moins un copolymère bloc S-B-M et au moins un copolymère bloc S-B.

**20.** Matériau selon l'une quelconque des revendications 16 à 18 dans lequel le modifiant choc comprend au moins un copolymère bloc S-B-M et au moins un polymère coeur-écorce (A).

**21.** Matériau selon l'une quelconque des revendications 16 à 18 dans lequel le modifiant choc comprend au moins un copolymère bloc S-B-M, au moins un caoutchouc réactif ATBN ou CTBN et éventuellement un copolymère bloc S-B.

**22.** Matériau selon l'une quelconque des revendications précédentes dans lequel tout ou partie du tribloc S-B-M est remplacée par un pentabloc M-S-B-S-M ou M-B-S-B-M.

**23.** Matériau selon l'une quelconque des revendications précédentes dans lequel la résine thermodure provient de la réaction d'une résine époxy thermodurcissable et d'un durcisseur.

**Patentansprüche**

**1.** Duroplastisches Material mit verbesserter Schlagzähigkeit, enthaltend:

- 99 bis 20% eines duroplastischen Harzes,
- 1 bis 80% eines Schlagzähigkeitsverbesserers, enthaltend mindestens ein Copolymer, das unter S-B-M-, B-M- und M-B-M-Blockcopolymeren ausgewählt ist, wobei:

    ➤ jeder Block mit dem anderen über eine kovalente Bindung oder ein mit einem der Blöcke durch eine kovalente Bindung und mit dem anderen Block durch eine andere kovalente Bindung verbundenes Zwischenmolekül verbunden ist,
    ➤ M für ein PMMA-Homopolymer oder ein Copolymer mit mindestens 50 Gew.-% Methylmethacrylat steht,
    ➤ B mit dem duroplastischen Harz und mit dem Block M unverträglich ist und eine unter der Anwendungstemperatur des duroplastischen Materials liegende Glasübergangstemperatur Tg aufweist,
    ➤ S mit dem duroplastischen Harz, dem Block B und dem Block M unverträglich ist und eine über der Tg von B liegende Tg bzw. Schmelztemperatur Tf aufweist.

**2.** Material nach Anspruch 1, bei dem die Blöcke M der Blockcopolymere zu mindestens 60% aus syndiotaktischem PMMA bestehen.

**3.** Material nach Anspruch 1 oder 2, bei dem die Blöcke M der Blockcopolymere reaktive Monomere, vorteilhafterweise Glycidylmethacrylat oder tert.-Butylmethacrylat, enthalten.

**4.** Material nach einem der vorhergehenden Ansprüche, bei dem die Tg der Blöcke B der Blockcopolymere unter 0°C liegt.

**5.** Material nach Anspruch 4, bei dem die Tg der Blöcke B der Blockcopolymere unter -40°C liegt.

**6.** Material nach Anspruch 5, bei dem die Blöcke B der Blockcopolymere überwiegend aus 1,4-Polybutadien bestehen.

**7.** Material nach einem der Ansprüche 4 bis 6, bei dem die Diene des Blocks B hydriert sind.

**8.** Material nach Anspruch 4, bei dem der Block B aus Poly(butylacrylat) besteht.

**9.** Material nach einem der vorhergehenden Ansprüche, bei dem die Tg bzw. die Tf von S über 23°C liegt.

**10.** Material nach Anspruch 9, bei dem die Tg bzw. die Tf von S über 50°C liegt.

**11.** Material nach Anspruch 10, bei dem S aus Polystyrol besteht.

**12.** Material nach einem der vorhergehenden Ansprüche, bei dem die zahlenmittlere Molmasse der Blockcopolymere zwischen 10.000 g/mol und 500.000 g/mol liegen kann.

**13.** Material nach Anspruch 12, bei dem die zahlenmittlere Molmasse der Blockcopolymere zwischen 20.000 g/mol und 200.000 g/mol liegen kann.

**14.** Material nach einem der vorhergehenden Ansprüche, bei dem der Anteil des Schlagzähigkeitsverbesserers 1 bis 35% auf jeweils 99 bis 65% duroplastisches Harz beträgt.

**15.** Material nach Anspruch 14, bei dem der Anteil des Schlagzähigkeitsverbesserers 8 bis 32% auf jeweils 92 bis 68% duroplastisches Harz beträgt.

**16.** Material nach einem der vorhergehenden Ansprüche, bei dem der Schlagzähigkeitsverbesserer mindestens eines der M-B-M- oder S-B-M-Blockcopolymere und mindestens ein unter Kern-Schale-Polymeren (A), funktionalisierten Elastomeren, S-B-Blockcopolymeren und ATBN- oder CTBN-Reaktivkautschuken ausgewähltes Polymer enthält.

**17.** Material nach Anspruch 16, bei dem es sich bei den Blöcken S und B des S-B-Diblocks um diejenigen gemäß den Ansprüchen 1 und 4 bis 11 handelt.

**18.** Material nach Anspruch 17, bei dem der S-B-Diblock eine zahlenmittlere Molmasse zwischen 10.000 g/mol und 500.000 g/mol aufweist.

**19.** Material nach einem der Ansprüche 16 bis 18, bei dem der Schlagzähigkeitsverbesserer mindestens ein S-B-M-Blockcopolymer und mindestens ein S-B-Blockcopolymer enthält.

**20.** Material nach einem der Ansprüche 16 bis 18, bei dem der Schlagzähigkeitsverbesserer mindestens ein S-B-M-Blockcopolymer und mindestens ein Kern-Schale-Polymer (A) enthält.

**21.** Material nach einem der Ansprüche 16 bis 18, bei dem der Schlagzähigkeitsverbesserer mindestens ein S-B-M-Blockcopolymer, mindestens einen ATBN- oder CTBN-Reaktivkautschuk und gegebenenfalls ein S-B-Blockcopolymer enthält.

**22.** Material nach einem der vorhergehenden Ansprüche, bei dem der S-B-M-Triblock ganz oder teilweise durch einen M-S-B-S-M- oder M-B-S-B-M-Pentablock ersetzt ist.

23. Material nach einem der vorhergehenden Ansprüche, bei dem das duroplastische Harz aus der Umsetzung eines wärmehärtbaren Epoxidharzes und eines Härters stammt.

**Claims**

1. Thermoset material with improved impact resistance comprising:

   - 99 to 20% of a thermoset resin,
   - 1 to 80% of an impact modifier comprising at least one copolymer chosen from copolymers comprising S-B-M, B-M and M-B-M blocks, in which:

     ➤ each block is connected to the other by means of a covalent bond or of an intermediate molecule connected to one of the blocks via a covalent bond and to the other block via another covalent bond,
     ➤ M is a PMMA homopolymer or a copolymer comprising at least 50% by weight of methyl methacrylate,
     ➤ B is incompatible with the thermoset resin and with the M block and its glass transition temperature Tg is less than the operating temperature of the thermoset material,
     ➤ S is incompatible with the thermoset resin, the B block and the M block and its Tg or its melting temperature M.t. is greater than the Tg of B.

2. Material according to Claim 1, in which the M blocks of the block copolymers are composed of syndiotactic PMMA to at least 60%.

3. Material according to Claim 1 or 2, in which the M blocks of the block copolymers comprise reactive monomers, advantageously glycidyl methacrylate or tert-butyl methacrylate.

4. Material according to any one of the preceding claims, in which the Tg of the B blocks of the block copolymers is less than 0°C.

5. Material according to Claim 4, in which the Tg of the B blocks of the block copolymers is less than -40°C.

6. Material according to Claim 5, in which the B blocks of the block copolymers are predominantly composed of 1,4-polybutadiene.

7. Material according to any one of Claims 4 to 6, in which the dienes of the B block are hydrogenated.

8. Material according to Claim 4, in which the B block is composed of poly(butyl acrylate).

9. Material according to any one of the preceding claims, in which the Tg or the M.t. of S is greater than 23°C.

10. Material according to Claim 9, in which the Tg or the M.t. of S is greater than 50°C.

11. Material according to Claim 10, in which S is polystyrene.

12. Material according to any one of the preceding claims, in which the number-average molar mass of the block copolymers can be between 10,000 g/mol and 500,000 g/mol.

13. Material according to Claim 12, in which the number-average molar mass of the block copolymers can be between 20,000 g/mol and 200,000 g/mol.

14. Material according to any one of the preceding claims, in which the proportion of impact modifier is from 1 to 35% for respectively 99 to 65% of thermoset resin.

15. Material according to Claim 14, in which the proportion of impact modifier is from 8 to 32% for respectively 92 to 68% of thermoset resin.

16. Material according to any one of the preceding claims, in which the impact modifier comprises at least one of the M-B-M or S-B-M block copolymers and at least one polymer chosen from core-shells (A), functionalized elastomers, S-B block copolymers and ATBN or CTBN reactive rubbers.

17. Material according to Claim 16, in which the S and B blocks of the S-B diblock are those in Claims 1 and 4 to 11.

18. Material according to Claim 17, in which the S-B diblock has a number-average molar mass which can be between 10,000 g/mol and 500,000 g/mol.

19. Material according to any one of Claims 16 to 18, in which the impact modifier comprises at least one S-B-M block copolymer and at least one S-B block copolymer.

20. Material according to any one of Claims 16 to 18, in which the impact modifier comprises at least one S-B-M block copolymer and at least one core-shell polymer (A).

21. Material according to any one of Claims 16 to 18, in which the impact modifier comprises at least one S-B-M block copolymer, at least one ATBN or CTBN reactive rubber and optionally an S-B block copolymer.

22. Material according to any one of the preceding claims, in which all or part of the S-B-M triblock is replaced with an M-S-B-S-M or M-B-S-B-M pentablock.

23. Material according to any one of the preceding claims, in which the thermoset resin originates from the reaction of a thermosetting epoxy resin and of a hardener.